# EUROPÄISCHE PATENTSCHRIFT

(11) **EP 1 146 405 B1**
(45) Veröffentlichungstag und Bekanntmachung des Hinweises auf die Patenterteilung: **19.10.2005**
(21) Anmeldenummer: 01105933.4
(22) Anmeldetag: 09.03.2001
(51) Int. Cl.: G05B 5/01

(54) **Regelverfahren**
Feedback control method
Méthode de régulation

(30) Priorität: 12.04.2000 DE 10018193
(43) Veröffentlichungstag der Anmeldung: 17.10.2001
(73) Patentinhaber: Bayerische Motoren Werke Aktiengesellschaft, 80809 München (DE)
(72) Erfinder: Hirschfelder, Klaus, 85241 Hebertshausen (DE); Schmidt, Christian, Dr., 81825 München (DE); Schäfer, Martin, Dr., 82216 Maisach (DE)

(56) Entgegenhaltungen:
- EP-A- 0 957 239
- US-A- 3 510 738
- US-A- 3 975 669
- US-A- 4 408 148
- US-A- 6 041 264

## Beschreibung

Die Erfindung betrifft ein Verfahren zum Regeln eines elektrischen Antriebs, bei dem eine Regelgröße (Ist-Wert) auf einen Soll-Wert eingeregelt wird.

Grundsätzlich sind zwei Arten von Regeleinrichtungen, nämlich unstetige Regeleinrichtungen und stetige Regeleinrichtungen bekannt. Unstetige Regeleinrichtungen umfassen beispielsweise Zwei- und Dreipunktregler. Stetige Regeleinrichtungen umfassen proportional wirkende Regler (P-Regler), integral wirkende Regler (I-Regler), proportional-integral wirkende Regler (PI-Regler) oder Vorhaltregler (PD-und PID-Regler).

Zum allgemeinen Stand der Technik wird auf das Studienbuch "Einführung in die Regelungstechnik" von Mann/Schiffelgen, 5. Aufl., 1986, hingewiesen.

Ferner ist aus der US 4,408,148 eine Art der Regelung zur Ansteuerung eines Aktuators bekannt, bei der mittels einem Komparator ein tolerierbarer (Abweichungs-) Bereich vorgegeben wird, wobei innerhalb des Bereichs ein anzusteuernder Aktuator nicht angesteuert wird und außerhalb dieses Bereichs der Aktuator wiederum solange angesteuert wird, bis dieser Bereich wieder eingehalten wird.

Bei vielen Anwendungen, insbesondere im Zusammenhang mit elektrischen Antrieben, besteht jedoch das Problem, dass ein Aktor bei einer ständig und andauernd durchgeführten Regelung überlastet wird. Bei elektrischen Antrieben kann insbesondere eine Überhitzung stattfinden.

Eine solche thermische Überlastung kann beispielsweise bei der Kraftübertragung mittels eines Schneckengetriebes auftreten. Das bei Schneckengetrieben inhärente Spiel führt bei einem Vorzeichenwechsel des Lastmomentes zu einem Durchfahren des Zahnflankenspiels. Liegt die Amplitude dieser Bewegung in einer Größenordnung, die von dem Istwertgeber festgestellt wird, so erfolgt eine permanente Regelbewegung, die einem Stellantrieb Energie für einen Vorzeichenwechsel des Moments zuführt. Auf diese Weise wird der Stellantrieb kurz- bzw. mittelfristig überlastet.

Um diesem Problemen beizukommen, wurde bei getakteten elektrischen Antrieben bereits vorgeschlagen, das Taktverhältnis gegen Null zu führen, wenn gemäß einer ersten Alternative die Taktlänge selbst unterhalb eines bestimmten Limits liegt oder wenn sich die Abweichung des Ist-Wertes von einem Soll-Wert innerhalb bestimmter Grenzen befindet. Durch die Vorgabe eines Taktverhältnisses von Null wird der Regler innerhalb einer bestimmten Zeitspanne faktisch abgeschalten. Der elektrische Antrieb kann sich in diesem Zeitraum dann erholen.

Die beiden erläuterten Verfahren besitzen jedoch den Nachteil, dass entweder der einzustellende Sollwert gar nicht erreicht wird oder dass beim Wiedereinschalten des Reglers mehr oder minder auf Losbrechkräfte abgestellt wird. Dies ist beispielsweise dann der Fall, wenn erst wieder eingeschaltet wird, wenn die Pulsweiten einer Pulsweitenmodulation einen bestimmten Grenzwert überschreiten.

Aufgabe der vorliegenden Erfindung ist es, ein Regelverfahren anzugeben, mit welchem zum einen ein Soll-Wert möglichst exakt anfahrbar ist. Zum anderen sollte jedoch auch ein thermischer Schutz eines elektrischen Antriebs gewährleistet sein.

Diese Aufgabe wird durch die im Anspruch 1 genannten Merkmale gelöst.

Mit dem ersten Schritt des erfindungsgemäßen Verfahrens wird erreicht, dass der Soll-Wert zumindest punktuell im wesentlichen genau angefahren wird. Nach dem Erreichen des Soll-Wertes wird der Regelvorgang dann unterbrochen. Durch diese Unterbrechung, während der dem elektrischen Antrieb kein Stellsignal geliefert wird, ist der elektrische Antrieb geschont, und findet auch keine kontinuierliche Nachregelung statt. Insbesondere kann damit eine thermische Überhitzung vermieden werden.

Während der Unterbrechung des Regelvorgangs wird fortwährend überprüft, ob die Differenz zwischen der Regelgröße und dem Soll-Wert einen vorgegebenen Betrag, nämlich eine Schwelle, überschreitet oder erreicht. Ist dies der Fall, wird die Unterbrechung des Regelvorganges beendet und die Regelgröße in Form des Ist-Wertes wiederum auf den vorgegebenen Soll-Wert eingeregelt.

Die erfindungsgemäße Verfahrensweise ist gerade bei elektrischen Antrieben mit einer langsamen Drift des Ist-Werts, was im wesentlichen einer relativ guten Selbsthemmung entspricht, von Vorteil. Als Anwendungsgebiet ergibt sich daher beispielsweise die Verstellung eines Ventilhubes bei einem Gaswechselventil eines Verbrennungsmotors mittels eines elektrischen Antriebes. Bei einem solchen Antrieb findet eine Kraftübertragung über ein Schneckengetriebe statt, welches eine relativ gute Selbsthemmung aufweist.

Als Regeleinrichtungen können Proportional-, Integral- oder Differenzialregler oder Regler mit einer Kombination der vorgenannten Regeleigenschaften verwendet werden. Im übrigen ist es möglich, die Schwelle, also den betragsmäßigen Abstand vom Sollwert, dynamisch zu verändern. Diese Dynamik kann auf Fahrzeugbetriebsparameter abgestellt werden, wobei die Fahrzeugbetriebsbedingungen auf diese Schwelle Einfluß haben. Gemäß einer besonders einfachen Ausführungsform ist es möglich, die Schwellgrößen aus einer Kennlinie oder einem Kennfeld zu entnehmen, in denen sie in Abhängigkeit von einer oder mehreren Betriebsgrößen abgelegt sind.

Die Erfindung wird nachfolgend mit Bezug auf die beiliegenden Zeichnungen und anhand eines Ausführungsbeispiels näher erläutert. Die Zeichnungen zeigen in
- Fig. 1: ein Blockschaltbild zur Erläuterung einer Ausführungsform des erfindungsgemäßen Verfahrens,
- Fig. 2: ein Diagramm, in dem der Ist-Wert gegenüber der Zeit aufgetragen ist, wodurch im wesentlichen das Regelverhalten erkannt werden kann,
- Fig. 3: ein einfaches Ablaufdiagramm und
- Fig. 4: ein Diagramm, welches eine dynamisch zu wählende Schwelle in Abhängigkeit von einem Betriebsparameter darstellt.

Die Erfindung wird vorliegend anhand eines Ausführungsbeispiels beschrieben, bei dem ein Elektromotor zur Einstellung eines variablen Ventilhubes bei einem Gaswechselventil eines Verbrennungsmotors verwendet wird. Je nach Drehwinkel des Elektromotors wird das Ventil beim Öffnen mehr oder weniger weit geöffnet.

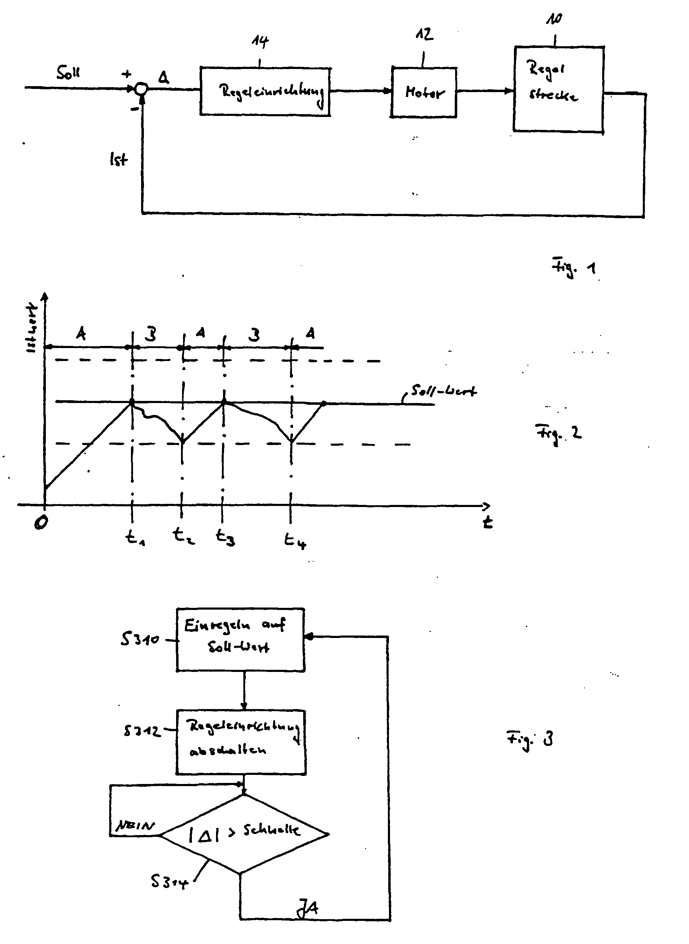

Ein einfaches Blockschaltbild bzw. ein Signalflußplan für eine solche Anwendungsweise ist in Fig. 1 dargestellt. Dabei stellt das Gaswechselventil eine Regelstrecke 10 dar, wobei die Regelgröße von einem Motor 12 in Form eines elektrischen Antriebs eingestellt wird.

Der Motor 12 wiederum erhält von einer Regeleinrichtung 14 eine elektrische Stellgröße zur Verfügung gestellt, aufgrund der er die Regelgröße beeinflußt. Die Regeleinrichtung 14 bestimmt die Stellgröße in Abhängigkeit von einer Größe Δ, welche sich als Differenz des Ist-Werts (Ist) vom Soll-Wert (Soll) ergibt. Die Regeleinrichtung kann vorliegend ein an sich bekannter P-, I-, D-, Pl- oder PID-Regler sein. Die Art der Regelung ist vorliegend nicht ausschlaggebend. Ausschlaggebend ist jedoch, dass die Regeleinrichtung nur zu bestimmten Zeiten betrieben wird, was nachfolgend erläutert ist.

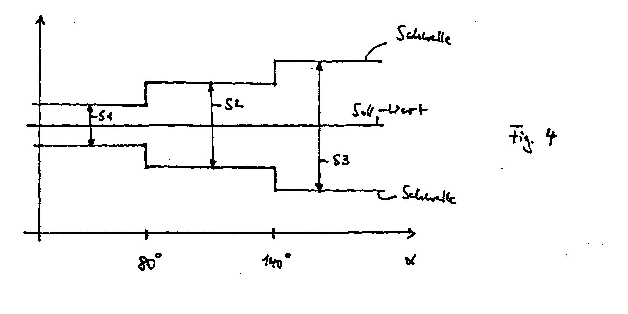

Gemäß Fig. 3 ist zu erkennen, dass zunächst die Regelgröße, nämlich der Ist-Wert, auf die Soll-Größe in der üblichen Weise eingeregelt wird (Schritt S 310).

Hat die Regelgröße den Soll-Wert erreicht oder im wesentlichen erreicht, so wird die Regeleinrichtung (14 in Fig. 1) abgeschalten (Schritt S 312), wodurch der Regelvorgang unterbrochen ist. Nach der Abschaltung der Regeleinrichtung 14 wird in einem nächsten Schritt S 314 kontinuierlich geprüft, ob die Abweichung Δ des Ist-Wertes vom Soll-Wert eine bestimmte, vorgegebene Schwelle überschreitet.

Ist dies nicht der Fall, so wird an den Anfang von Schritt S 314 zurückverzweigt und wieder geprüft.

Überschreitet die Differenz Δ jedoch die vorgegebene Schwelle, so wird zu Schritt S 310 zurückverzweigt und der dann von dem Soll-Wert wieder abweichende Ist-Wert wiederum auf den Soll-Wert eingeregelt.

Durch die in Fig. 3 dargestellte Verfahrensweise erreicht man ein Regelverhalten, wie in Fig. 2 angegeben. Aus Fig. 2, in der der Ist-Wert gegenüber der Zeit aufgetragen ist, ist zu erkennen, dass zunächst zwischen einem Zeitpunkt 0 und t₁ eine Einregelung des Ist-Wertes auf den Soll-Wert durchgeführt wird. Der Ist-Wert hat den Soll-Wert dann zum Zeitpunkt t₁ erreicht. Zu diesem Zeitpunkt wird die Regeleinrichtung 14 abgeschalten, so dass der Motor 12 nicht mehr von einer Stellgröße beaufschlagt wird. Bei der dann anschließenden kontinuierlichen Überprüfung der Differenz Δ zwischen Ist-Wert und Soll-Wert wird festgestellt, dass die in Fig. 2 gestrichelt dargestellte Schwelle zu einem Zeitpunkt t₂ erreicht bzw. überschritten wird.

Zum Zeitpunkt t₂ wird die Regeleinrichtung 14 dann wieder aktiviert, wodurch der Ist-Wert wieder auf den Soll-Wert zurückgeführt wird, was zum Zeitpunkt t₃ der Fall ist.

Im Zeitraum zwischen t₃ und t₄ wird die Regeleinrichtung 14 dann wieder deaktiviert, wodurch der Motor 12 entlastet wird. Erst zum Zeitpunkt t₄ findet dann wieder eine Aktivierung der Regeleinrichtung statt.

Insbesondere bei einer langsamen Drift des Ist-Wertes ist eine solche Vorgehensweise von besonderem Interesse. Die vorgenannte Regleranwendung ist im allgemeinen nur dann geeignet, wenn die Abweichung des Ist-Wertes vom Soll-Wert innerhalb des zugestandenen Schwellbereiches zu keinen Nachteilen für die Regelstrecke führt und insgesamt keine negativen Auswirkungen hat. Günstig erweist sich in diesem Zusammenhang eine Anwendung bei der die Zeiträume, in denen eine Deaktivierung der Regeleinrichtung stattfindet, ausreichend lange sind, um so eine thermische Überlastung eines ansonsten ständig beaufschlagten Motors zu vermeiden.

Die vorliegende Erfindung hat auch den Vorteil, dass eine Deaktivierung direkt auf das Toleranzband, nämlich die Abweichung von Ist- und Sollwert, bezogen werden kann. Dies gewährleistet eine Unabhängigkeit von Toleranzen bei der Mechanik und von Widerstandsmomenten, die ansonsten möglicherweise nicht berücksichtigt werden würden.

In Fig. 4 ist dargestellt, wie die Schwellen in Abhängigkeit von einem Betriebsparameter, vorliegend dem Motordrehwinkel α, variabel gewählt werden können. Bei dem Beispiel gemäß Fig. 4 wird in einem Winkelbereich zwischen 0 und 80° eine Schwelle S1 gewählt. Im Winkelbereich zwischen 80° und 140° wird eine signifikant größere Schwelle S2 gewählt, und im Winkelbereich über 140° wird eine nochmals größere Schwelle S3 gewählt. Dies bedeutet, dass je nach Winkelbereich eine Abstimmung des Schwell-Wertes auf Fahrzeuggegebenheiten durchgeführt werden kann

## Patentansprüche

1. Verfahren zum Regeln eines elektrischen Antriebes bei dem eine Regelgröße (Ist-Wert) auf einen Soll-Wert eingeregelt wird,
**gekennzeichnet durch** die sich wiederholende Reihe von macheinander folgenden Schritten:
Einregeln der Regelgröße auf den Soll-Wert in der Weise, daß der Soll-Wert möglichst exakt angefahren wird,
Unterbrechen des Regelvorganges, wenn die Regelgröße den Soll-Wert erreicht Überprüfen, ob die Differenz zwischen Regelgröße und Soll-Wert einen vorgegebenen Betrag (Schwelle) überschreitet, und
Beenden der Unterbrechung des Regelvorganges, wenn der vorgegebene Betrag (Schwelle) erreicht oder überschritten ist.

2. Verfahren nach Anspruch 1,
**dadurch gekennzeichnet,**
**daß** als Regler Proportional-, Integral- oder Differenzialregler oder Regler mit einer Kombination der vorgenannten Reglereigenschaften verwendet werden.

3. Verfahren nach Anspruch 1 oder 2,
**dadurch gekennzeichnet,**
**daß** die Schwelle dynamisch verändert wird.

4. Verfahren nach Anspruch 3,
**dadurch gekennzeichnet,**
**daß** die Schwelle in Abhängigkeit von einem oder mehreren Fahrzeugbetriebsparametem verändert wird.

5. Verfahren nach Anspruch 3 oder 4,
**dadurch gekennzeichnet,**
**daß** die Schwelle aus einer Kennlinie oder einem Kennfeld entnommen wird.

6. Verfahren nach einem der vorhergehenden Ansprüche,
**dadurch gekennzeichnet,**
**daß** als elektrischer Antrieb ein Elektromotor verwendet wird, der zur Verstellung eines Ventilhubes bei einem Gaswechselventils eines Verbrennungsmotors dient.

## Claims

1. A method of automatically controlling an electric drive, wherein a controlled variable (actual value) is automatically adjusted to a set value,
**characterised by** the following steps in repeated sequence:
automatically adjusting the controlled variable to the set value by approaching the set value as closely as possible,
interrupting the control process when the controlled variable reaches the set value,
checking whether the difference between the controlled variable and the set value exceeds a set amount (threshold) and
ending the interruption to the control process when the set amount (threshold) is reached or exceeded.

2. A method according to claim 1, **characterised in that** the automatic controller is proportional, integral or differential-action or has a combination of the said properties.

3. A method according to claim 1 or 2, **characterised in that** the threshold is dynamically altered.

4. A method according to claim 3, **characterised in that** the threshold is altered in dependence on one or more operating parameters of the vehicle.

5. A method according to claim 3 or 4, **characterised in that** the threshold is taken from a characteristic or a family of characteristics.

6. A method according to any of the preceding claims, **characterised in that** the electric drive is an electric motor for adjusting the stroke of a gas change valve in an internal combustion engine.

## Revendications

1. Procédé de régulation d'un entraînement électrique selon lequel on asservit une grandeur de régulation (valeur réelle) sur une valeur de consigne,
**caractérisé par**
une série d'étapes successives suivantes :
- régulation de la grandeur de régulation sur la valeur de consigne pour que celle-ci soit atteinte aussi précisément que possible,
- interruption de l'opération de régulation si la grandeur de régulation atteint la valeur de consigne,
- vérification si la différence entre la grandeur de régulation et la valeur de consigne dépassent une amplitude prédéfinie (seuil), et
- terminer l'interruption de l'opération de régulation si le seuil prédéfini est atteint ou est dépassé.

2. Procédé selon la revendication 1,
**caractérisé en ce que**
le régulateur est un régulateur proportionnel, intégral ou différentiel ou un régulateur présentant une combinaison des propriétés de régulation évoquées ci-dessus.

3. Procédé selon l'une quelconque des revendications 1 ou 2,
**caractérisé en ce que**
le seuil est modifiable de manière dynamique.

4. Procédé selon la revendication 3,
**caractérisé en ce qu'**
on modifie le seuil suivant un ou plusieurs paramètres de fonctionnement du véhicule.

5. Procédé selon l'une quelconque des revendications 3 ou 4,
**caractérisé en ce qu'**
on prélève le seuil d'une courbe caractéristique ou d'un champ de courbes caractéristiques.

6. Procédé selon l'une quelconque des revendications précédentes,
**caractérisé en ce qu'**
on utilise l'entraînement d'un moteur électrique servant à régler la course d'une soupape d'échange de gaz d'un moteur à combustion interne.
